# EUROPÄISCHE PATENTANMELDUNG

(11) **EP 3 805 291 A1**
(43) Veröffentlichungstag der Anmeldung: **14.04.2021**
(21) Anmeldenummer: 19202721.7
(22) Anmeldetag: 11.10.2019
(51) Int. Cl.: C08G 69/26, C08G 69/40, C08L 77/06

(54) **FORMMASSE ENTHALTEND POLYETHERAMID (PEA)**

(71) Anmelder: Evonik Operations GmbH, 45128 Essen (DE)
(72) Erfinder: BAUMANN, Franz-Erich, 48249 Dülmen (DE); SALWICZEK, Kathrin, 45665 Recklinghausen (DE)
(74) Vertreter: Evonik Patent Association

(57) **Zusammenfassung**

Die Erfindung betrifft eine Formmasse enthaltend Polyetheramid (PEA) auf Basis einer Untereinheit 1 aus mindestens einem linearen aliphatischen Diamin mit 5 bis 15 C-Atomen und mindestens einer linearen aliphatischen oder aromatischen Dicarbonsäure mit 6 bis 14 C-Atomen. Weiterhin enthält das PEA eine Untereinheit 2 aus mindestens einem Polyetherdiamin mit wenigstens 2,3 C-Atomen pro Ethersauerstoff und NH₂-Gruppen an den Kettenenden. Die Formmasse enthält maximal 2,5 Gew.-% eines funktionelle Gruppen enthaltenden Kautschuks. Die Anzahl der C-Atome mindestens einer Komponente ausgewählt aus Diamin und Dicarbonsäure beträgt mindestens 13 und die zahlenmittlere molare Masse der Untereinheit 2 beträgt 200 bis 900 g/mol. Aus der Formmasse kann ein geformter Gegenstand erstellt werden, welcher ein Formteil, eine Folie, eine Borste, eine Faser oder ein Schaum sein kann.

## Beschreibung

Die vorliegende Erfindung betrifft Formmasse enthaltend Polyetheramid (PEA), einen geformten Gegenstand daraus und seine Verwendung.

Polyetheramide (PEA) sind Blockcopolymere, welche durch Polykondensation von (Oligo-)Polyamiden, insbesondere säuregeregelten Polyamiden, mit alkohol- oder aminoterminierten Polyethern erhalten werden. Säuregeregelte Polyamide weisen Carbonsäureendgruppen im Überschuss auf. Die Polyamidblöcke bezeichnet der Fachmann als Hartblöcke und die Polyetherblöcke als Weichblöcke. Ihre Herstellung ist prinzipiell bekannt. Die DE2712987A1 (US4207410) beschreibt derartige Polyamid-Elastomere aus Lactamen mit 10 - 12 C-Atomen, Dicarbonsäuren und Polyetherdiolen. Die hiernach erhältlichen Produkte zeichnen sich durch dauerhafte Flexibilität und Duktilität auch bei tiefen Temperaturen aus, sind aber bereits in Formteilen mäßiger Schichtdicke trübe bis opak und fallen bei längerem Lagern bei Raumtemperatur durch oberflächliche Beläge, mit einem mehltauähnlichen Aspekt, auf. Ähnlich aufgebaute Polyamid-Elastomere, aufgebaut aus Diaminen mit 6 - 20 C-Atomen, aliphatischen oder aromatischen Dicarbonsäuren und Polyetherdiolen sind aus EP0095893 bekannt. Kennzeichnende Eigenschaften sind eine erhöhte Wärmeformbeständigkeit und Flexibilität. Hinsichtlich Transluzenz der Formteile und Belagsbildung lassen sich aus dieser Schrift keine Angaben entnehmen.

PA11-basierte und PA12-basierte PEA-Formmassen fallen ebenfalls durch opaken, trüben Aspekt oder Bildung von Oberflächenbelägen negativ auf. Weiterhin wurde beobachtet, dass sie einen hohen Belag bei gleichzeitig geringer Transluzenz aufweisen. Die aktuellen Formmassen sind daher für Anwendungen wenig geeignet.

Insofern war es Aufgabe der vorliegenden Erfindung, geeignete Formmassen bereitzustellen, welche eine hohe Transluzenz mit geringem Haze und eine Belagsfreiheit auch über einen längeren Zeitraum mit sich bringen.

Gelöst werden konnte diese Aufgabe durch eine Formmasse enthaltend Polyetheramid (PEA) auf Basis einer Untereinheit 1 aus mindestens einem linearen aliphatischen Diamin mit 5 bis 15 C-Atomen, vorzugsweise 6 bis 10 C-Atomen und mindestens einer linearen aliphatischen Dicarbonsäure mit 6 bis 14 C-Atomen, vorzugsweise 12 bis 14 C-Atomen und einer Untereinheit 2 aus mindestens einem Polyetherdiamin mit wenigstens 2,3 C-Atomen pro Ethersauerstoff und NH₂-Gruppen an den Kettenenden. Die Formmasse enthält maximal 2,5 Gew.-% eines funktionelle Gruppen enthaltenden Kautschuks. Die Anzahl der C-Atome aus mindestens einer Komponente ausgewählt aus Diamin und Dicarbonsäure beträgt mindestens 13 C-Atome; die zahlenmittlere molare Masse der Untereinheit 2 beträgt 200 bis 900 g/mol. Vorzugsweise beträgt die molare Masse der Untereinheit 2 300 bis 700 g/mol. Die Untereinheit 1 bildet damit den allgemein als Hartblock bezeichneten Teil, die Untereinheit 2 den Weichblock. Der Begriff linear ist derart zu verstehen, dass die Kohlenstoffketten keine Verzweigungen aufweisen.

In einer bevorzugten Ausführungsform beträgt die zahlenmittlere molare Masse der Untereinheit 1 250 bis 4500 g/mol, besonders bevorzugt 400 bis 2500 g/mol, weiter besonders bevorzugt 400 bis 2000 g/mol, ganz besonders bevorzugt 500 bis 1600 g/mol. Dies führt zu einem Material mit höherer Transluzenz bei gleichzeitig geringerer Belagsbildung.

Das Polyetherdiamin des PEA ist vorzugsweise ausgewählt aus diaminiertem Polypropylenglykol, diaminiertem Polytetramethylenglykol, ihren Copolyethern und Mischungen daraus.

Die Summe der C-Atome aus Diamin und Dicarbonsäure im PEA beträgt 19 bis 24.

Geeignete Polyamide der Untereinheit 1 werden beispielsweise ausgewählt aus6.13, 6.14, 10.14.

Die erfindungsgemäße Formmasse enthält maximal 2,5 Gew.-% eines funktionelle Gruppen enthaltenden Kautschuk. Vorzugsweise sind maximal 0,5 Gew-% und bevorzugt maximal 0,1 Gew.-% enthalten. Es ist besonders bevorzugt, wenn der Kautschuk nicht enthalten ist. Derartige Kautschuke sind beispielsweise beschrieben in EP-A-1518901.

Ein weiterer Gegenstand der Erfindung ist ein geformter Gegenstand, hergestellt aus der erfindungsgemäßen Formmasse. Vorzugsweise ist der geformte Gegenstand ein Formteil, eine Folie, eine Borste, eine Faser oder ein Schaum. Der geformte Gegenstand kann beispielsweise hergestellt werden durch Pressen, Schäumen, Extrusion, Coextrusion, Blasformen, 3D-Blasformen, Coextrusionsblasformen, Coextrusions-3D-Blasformen, Coextrusions-Saugblasformen oder Spritzgießen. Dem Fachmann sind derartige Verfahren bekannt.

Ein weiterer Gegenstand der Erfindung stellt die Verwendung des erfindungsgemäßen geformten Gegenstands dar, welcher beispielsweise als Faserverbundbauteil, Schuhsohle, Oberbeläge von Skiern oder Snowboards, Medienleitung, Brillengestell, Designartikel, Dichtungsmaterial, Körperschutz (Body Protection), Dämmstoff oder foliertes Gehäuseteil genutzt werden kann.

### Beispiele

### Herstellung der Polyetheramide (PEA)

### Allgemeine Arbeitsweise zur Herstellung der PEA:

Im Vorlagekessel einer 100 L-Zweikessel-Polykondensationsanlage, versehen mit einem Ankerrührer, werden unterhalb 60 °C nacheinander das Diamin, 10 % dessen Masse vollentsalztes (VE-) Wasser, Dicarbonsäure und das Polyetherdiamin (ELASTAMIN ® RP405 bzw. RP 2005) vorgelegt. PPG-diamin bildet die Untereinheit 2. Bezogen auf das Polyetherdiamin werden 0,1% IRGANOX® 1098 (BASF SE) als Prozessstabilisator zugesetzt. Bezogen auf den gesamten Feststoffgehalt werden 0,3 % 50 %ige hypophosphorige Säure als Katalysator zugesetzt. Nach mehrfacher Druckinertisierung mit N₂ wird der Kesselinhalt auf 180 °C - 190 °C erhitzt; bei 160 °C wird der Rührer zugeschaltet. Die Einsatzstoffe werden 1 Stunde verrührt und danach in den Polykondensationsreaktor, versehen mit einem Wendelrührer und Drehmomentaufnahme, überführt. Nach erfolgtem Druckausgleich zwischen beiden Behältern wird das Reaktorventil geschlossen und der Inhalt unter Rühren bei 25 Upm innerhalb von 6 Stunden auf 228 °C - 232 °C gebracht: Bei Erreichen von 21 bar autogenem Druck - normalerweise zwischen 210 °C und 215 °C Innentemperatur - wird eine zweistündige Druckhaltestufe eingehalten und danach kontinuierlich unter weiterem Hochheizen auf Atmosphärendruck entspannt. Nach 3 - 4 Stunden bei Atmosphärendruck wird - soweit das gewünschte Enddrehmoment noch nicht erreicht ist- innerhalb von 5 Stunden Vakuum angelegt, bis ein Endvakuum von 40 - 60 mbar erreicht ist. Unter diesen Bedingungen wird weiter gerührt, bis das gewünschte Enddrehmoment erreicht ist. Die Schmelze wird als Strang in ein Wasserbad ausgefahren, granuliert und bei 70 °C - 90 °C in einem Taumeltrockner auf einen Wassergehalt < 0,1 % getrocknet.

### Stoffmengenverhältnis Untereinheit 1 zu Untereinheit 2: 100:103

In der folgenden Tabelle 1 sind die hergestellten PEA zusammengefasst. Die molare Masse der Untereinheit 1 ergibt sich aus dem Stoffmengenverhältnis der eingesetzten Dicarbonsäure und des Diamins.

**Tabelle 1: Dargestellte PEA**

| **Versuch** | **Diamin** | **Einwaage Diamin kg** | **Dicarbonsäure** | **Einwaage Dicarbonsäure kg** | **Mn Untereinheit 1** | **Mn PPG-diamin** | **PPG-diamin -Einwaage kg** | **Produkt** |
|---|---|---|---|---|---|---|---|---|
| 1 | 6 | 13.721,10 | 13 | 31.278,90 | 4096 | 405 | 4.150,13 | PEA 6.13 |
| 2 | 6 | 13.082,82 | 13 | 31.917,18 | 2268 | 405 | 7.531,53 | PEA 6.13 |
| 3 | 6 | 12.355,98 | 13 | 32.644,02 | 1509 | 405 | 11.382,08 | PEA 6.13 |
| 4 | 6 | 11.491,36 | 13 | 33.508,64 | 1083 | 405 | 15.962,53 | PEA 6.13 |
| 5 | 6 | 12.507,91 | 14 | 32.492,09 | 2268 | 405 | 7.564,33 | PEA 6.14 |
| 6 | 6 | 11.764,68 | 14 | 33.235,32 | 1509 | 405 | 11.432,78 | PEA 6.14 |
| 7 | 6 | 10.880,37 | 14 | 34.119,63 | 1083 | 405 | 16.035,53 | PEA 6.14 |
| 8 | 10 | 16.106,96 | 14 | 28.893,04 | 2268 | 405 | 7.658,17 | PEA 10.14 |
| 9 | 10 | 13.988,53 | 14 | 31.011,47 | 1083 | 405 | 16.208,31 | PEA 10.14 |
| 10 | 10 | 10.634,92 | 14 | 34.365,08 | 600 | 405 | 29.743,73 | PEA 10.14 |
| 11 | 10 | 14.317,30 | 14 | 25.682,70 | 2268 | 405 + 2005 (1:1)* | 5.485,47 + 5.548 | PEA 10.14 |
| 12 | 10 | 9.325,69 | 14 | 20.674,31 | 1083 | 405 + 2005 (1:1)* | 8.707,37+8.004 | PEA 10.14 |
| 13 | 10 | 9.325,69 | 14 | 20.674,31 | 1083 | 405 + 2005 (2:1)* | 9.525,66+4.764 | PEA 10.14 |

| | | | | | | | | |
|---|---|---|---|---|---|---|---|---|
| Alle Einwaagen in kg; * Massenverhältnis, korrigiert auf Äquivalentgewichte der Polyetherdiamine Diamin 6 = Hexamethylendiamin Dicarbonsäure 13 = Brassylsäure Dicarbonsäure 18 = 1,18-Octadecandisäure PPG-diamin: Polypropylenglykoldiamin Diamin 10 = 1,10-Decamethylendiamin Dicarbonsäure 14 = 1,14-Tetradecandisäure | | | | | | | | |

Die dargestellten PEA wurden hinsichtlich Strang-Aspekt, relativer Viskosität ηᵣₑₗ und Schmelzpunkt Tm untersucht (vgl. Tab. 2). Strang-Aspekt: Visuelle Betrachtung. Viskosität: ISO 307. Tm: DSC, 2. Aufheizen nach ISO 11357.

**Tabelle 2: Eigenschaften der dargestellten PEA**

| **Versuch** | **Produkt** | **Strang-Aspekt** | **ηᵣₑₗ** | **Tm (DSC, 2. Aufh.)** |
|---|---|---|---|---|
| 1 | PEA 6.13 | Transparent | 1,63 | 189 |
| 2 | PEA 6.13 | Transparent | 1,85 | 187 |
| 3 | PEA 6.13 | Transparent | 1,62 | 182 |
| 4 | PEA 6.13 | Transparent | 1,86 | 178 |
| 5 | PEA 6.14 | Transparent | 1,80 | 191 |
| 6 | PEA 6.14 | Transparent | 1,73 | 185 |
| 7 | PEA 6.14 | Transparent | 1,78 | 180 |
| 8 | PEA 10.14 | Transparent | 1,81 | 184 |
| 9 | PEA 10.14 | Transparent | 1,76 | 174 |
| 10 | PEA 10.14 | Transparent | 1,63 | 141 |
| 11 | PEA 10.14 | opak | 1,76 | 174 |
| 12 | PEA 10.14 | opak | 1,66 | 169 |
| 13 | PEA 10.14 | Milchig-trüb | 1,62 | 168 |

### Prüfung der hergestellten Polyetheramide

### Belagstest

Aus den Polyetheramiden wurden Spritzplatten mit den Maßen 60 mm x 60 mm x 2 mm als Probenkörper gefertigt. Die Belagsbildung wurde ermittelt, nachdem der Probenkörper in einem geschlossenen Gefäß und Wasserdampfsättigung bei 75°C über einen Prüfzeitraum von 10 Tagen gelagert wurde. Der Belag wurde visuell mit einer vierstufigen Skala (von 0-3, wobei 0 = belagsfrei ist und 3 = stark belegt ist) beurteilt

### Bestimmung Transluzenz

Die Transluzenz der zuvor genannten Probenkörper wurde visuell ermittelt. Hierbei wurde folgende Bewertung vorgenommen (mit sinkender Transluzenz):
0 = transluzent ++
1 = transluzent +
2 = transluzent 0
3 = opak-milchig, transluzent 0
4 = opak-milchig, transluzent -
5 = milchig-weiß.

### Bestimmung Haze-Wert

Der Haze-Wert bestimmt die Illumination durch einen Gegenstand im Gegenlicht. Hier wird der Haze-Wert anhand der 60 x 60 x 2 mm Platten gemessen nach der ASTM-Norm D 1003 mit Konica-Minolta CM-3600d. Sofern die Probe opak-milchig oder gar milchig-weiß war, wurde in der Regel auf die Bestimmung des Haze-Wertes verzichtet.

**Tabelle 3: Testergebnisse von PEA 6.13-405 (erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 1 | PEA 6.13 | 4096 | 405 | 0 | 60,3 | 0-1 |
| 2 | PEA 6.13 | 2268 | 405 | 0 | 56,6 | 0-1 |
| 3 | PEA 6.13 | 1509 | 405 | 0 | 48,1 | 0-1 |
| 4 | PEA 6.13 | 1083 | 405 | 0 | 42,3 | 0-1 |

| | | | | | | |
|---|---|---|---|---|---|---|
| Die Proben von PEA 6.13 weisen keinen Belag bei hoher Transluzenz und geringem Haze-Wert auf. | | | | | | |

**Tabelle 4: Testergebnisse von PEA 6.14-405 (erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 5 | PEA 6.14 | 2268 | 405 | 1 | 53,8 | 1 |
| 6 | PEA 6.14 | 1509 | 405 | 0-1 | 41,9 | 0 |
| 7 | PEA 6.14 | 1083 | 405 | 1 | 29,8 | 0 |

| | | | | | | |
|---|---|---|---|---|---|---|
| Die Probenkörper von PEA 6.14 sind transparent mit niedrigem Haze. Sie sind entweder belagsfrei oder weisen geringe Beläge auf. | | | | | | |

**Tabelle 5: Testergebnisse von PEA 10.14-405 (erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 8 | PEA 10.14 | 2268 | 405 | 1 | 20,7 | 0 |
| 9 | PEA 10.14 | 1083 | 405 | 0-1 | 18,5 | 0 |
| 10 | PEA 10.14 | 600 | 405 | 0 | 7,9 | 0 |

| | | | | | | |
|---|---|---|---|---|---|---|
| Proben von PEA 10.13 zeigen eine hohe Transluzenz und erfüllen den Belagstest. | | | | | | |

**Tabelle 6: Testergebnisse von PEA 10.14-405/2005 (nicht erfindungsgemäß)**

| **Versuch** | **Produkt** | **Mn Untereinheit 1** | **Mn Untereinheit 2** | **Belagstest** | **Haze-Wert** | **Transluzenz (visuell)** |
|---|---|---|---|---|---|---|
| 11 | PEA 10.14 | 2268 | 405 + 2005 (1:1)* | 0-1 | 99,2 | 4 |
| 12 | PEA 10.14 | 1083 | 405 + 2005 (1:1)* | 1 | 102 | 4 |
| 13 | PEA 10.14 | 1083 | 405 + 2005 (2:1)* | 0-1 | 93,4 | 4 |

| | | | | | | |
|---|---|---|---|---|---|---|
| * Massenverhältnis | | | | | | |

PEA 10.14 mit einer Untereinheit, welche Monomere mit einer hohen molaren Masse von 2005 g/mol enthält, zeigen geringe bis keine Beläge. Allerdings sind die Probekörper milchig-weiß.

## Patentansprüche

1. Formmasse enthaltend Polyetheramid (PEA) auf Basis einer Untereinheit 1 aus mindestens einem linearen aliphatischen Diamin mit 5 bis 15 C-Atomen und mindestens einer linearen aliphatischen oder aromatischen Dicarbonsäure mit 6 bis 14 C-Atomen und einer Untereinheit 2 aus mindestens einem Polyetherdiamin mit wenigstens 2,3 C-Atomen pro Ethersauerstoff und NH₂-Gruppen an den Kettenenden, wobei die Formmasse maximal 2,5 Gew.-% eines funktionelle Gruppen enthaltenden Kautschuk enthält, **dadurch gekennzeichnet, dass** die Anzahl der C-Atome aus mindestens einer Komponente ausgewählt aus Diamin und Dicarbonsäure mindestens 13 C-Atome beträgt; die zahlenmittlere molare Masse der Untereinheit 2 beträgt 200 bis 900 g/mol.

2. Formmasse nach Anspruch 1, **dadurch gekennzeichnet, dass** die zahlenmittlere molare Masse der Untereinheit 2 300 bis 700 g/mol beträgt.

3. Formmasse nach einem der vorherigen Ansprüche, **dadurch gekennzeichnet, dass** die zahlenmittlere molare Masse der Untereinheit 1 250 bis 4500 g/mol beträgt.

4. Formmasse nach Anspruch 3, **dadurch gekennzeichnet, dass** die zahlenmittlere molare Masse der Untereinheit 1 400 bis 2500 g/mol beträgt.

5. Formmasse nach einem der vorherigen Ansprüche, **dadurch gekennzeichnet, dass** das Polyetherdiamin ausgewählt ist aus diaminiertem Polypropylenglykol, diaminiertem Polytetramethylenglykol, ihren Copolyethern und Mischungen daraus.

6. Formmasse nach einem der vorherigen Ansprüche, **dadurch gekennzeichnet, dass** die Summe der C-Atome aus Diamin und Dicarbonsäure 19-24 beträgt.

7. Formmasse nach einem der vorherigen Ansprüche, **dadurch gekennzeichnet, dass** die Untereinheit 1 ausgewählt ist aus Polyamid 6.13, 6.14 und 10.14.

8. Formmasse nach einem der vorherigen Ansprüche, **dadurch gekennzeichnet, dass** der Anteil an Kautschuk maximal 0,5 Gew.-%, bevorzugt maximal 0,1 Gew.-% beträgt.

9. Formmasse nach einem der vorherigen Ansprüche, **dadurch gekennzeichnet, dass** das Diamin 6 bis 10 C-Atome enthält.

10. Formmasse nach einem der vorherigen Ansprüche, **dadurch gekennzeichnet, dass** die Dicarbonsäure 12 bis 14 C-Atome enthält.

11. Geformter Gegenstand, hergestellt aus der Formmasse gemäß einem der vorhergehenden Ansprüche.

12. Geformter Gegenstand nach Anspruch 11, **dadurch gekennzeichnet, dass** er ein Formteil, eine Folie, eine Borste, eine Faser oder ein Schaum ist.

13. Geformter Gegenstand nach einem der Ansprüche 11 oder 12, hergestellt durch Pressen, Schäumen, Extrusion, Coextrusion, Blasformen, 3D-Blasformen, Coextrusionsblasformen, Coextrusions-3D-Blasformen, Coextrusions-Saugblasformen oder Spritzgießen.

14. Verwendung eines geformten Gegenstands nach einem der Ansprüche 11 bis 13, als Faserverbundbauteil, Schuhsohle, Oberbeläge von Skiern oder Snowboards, Medienleitung, Brillengestell, Designartikel, Dichtungsmaterial, Körperschutz (Body Protection), Dämmstoff, folierte Gehäuseteile.
